# EUROPEAN PATENT APPLICATION

(11) **EP 2 042 557 A1**
(43) Date of publication of application: **01.04.2009**
(21) Application number: 07768264.9
(22) Date of filing: 29.06.2007
(51) Int. Cl.: C08L 81/06, C08J 3/07, H01M 4/86, H01M 8/10

(54) **POLYMER ELECTROLYTE EMULSION AND USE THEREOF**

(30) Priority: 04.07.2006 JP 2006184244
(71) Applicant: Sumitomo Chemical Company, Limited, Tokyo 104-8260 (JP)
(72) Inventor: KURODA, Ryuma, Ehime 792-0017 (JP); SAITO, Shin, Ibaraki 305-0005 (JP); KURITA, Hiroyuki, Ibaraki 305-0821 (JP); MASUI, Kentaro, Ibaraki 305-0821 (JP)
(74) Representative: Henkel, Feiler & Hänzel
(86) International application number: PCT/JP2007/063531
(87) International publication number: WO 2008/004645

(57) **Abstract**

A polymer electrolyte emulsion wherein a polymer electrolyte particle is dispersed in a dispersing medium, wherein a polymer electrolyte contained in the polymer electrolyte particle is a block copolymer consisting of a segment having an acidic group and a segment without substantially ion exchange group, is provided.

## Description

### Technical Field

The present invention relates to a polymer electrolyte emulsion, and an electrode, a membrane electrode connector and a polymer electrolyte fuel cell manufactured using this.

### Background Art

The polymer electrolyte fuel cell is expected to be put into practical use in houses and automobiles as an electric generator, in recent years. The polymer electrolyte fuel cell is used as a form in which an electrode called a catalyst layer containing a catalyst such as platinum for promoting an oxidation reduction reaction of hydrogen and the air is formed on both sides of the polymer electrolyte membrane and, further, a gas diffusion layer for effectively supplying a gas to the catalyst layer is formed on an outer side of the catalyst layer. Herein, an entity in which the catalyst layer is formed on both sides of the polymer electrolyte membrane is usually called membrane electrode assembly (hereinafter, may be referred to as 'MEA').

Such the MEA is manufactured by using a method of directly forming a catalyst layer on a polymer electrolyte membrane, a method of forming a catalyst layer on a substrate which is to be a gas diffusion layer such as carbon paper, and connecting this with a polymer electrolyte membrane, a method of forming a catalyst layer on a flat plate supporting substrate, transferring this onto a polymer electrolyte membrane, and peeling the supporting substrate. In these methods, a liquid composition in which a catalyst for forming a catalyst layer is dispersed or dissolved (hereinafter, may be referred to as a term of 'catalyst ink' used widely in the art) is used. The catalyst ink is usually obtained by mixing and dispersing a catalyst substance in which a platinum group metal is carried by active carbon or the like (catalyst powder), a polymer electrolyte solution or dispersion containing a polymer electrolyte, a representative of which is Nafion and, if necessary, a solvent, a water-repellent, a pore forming agent, and a thickner. Previously, many techniques for improving electric generating performance of MEA by improving such the catalyst ink have been disclosed.

For example, Japanese Patent Application Laid Open (JP-A) No. 2005-132996 discloses that MEA excellent in electric generating performance is obtained by using an aqueous dispersion (emulsion) containing a sulfonated polymer particle containing, as an essential component, polyorganosiloxane, and an aqueous medium, as an electrode material of the polymer electrolyte fuel cell. However, electric generating performance is not necessarily sufficient, and there is room for improvement.

### Disclosure of the invention

An object of the present invention is to provide a polymer electrolyte emulsion suitable in an electrode material which enables dramatic improvement in electric generating performance of MEA.

The present inventors intensively studied an electrode material which can provide MEA more excellent in electric generating performance, resulting in completion of the present invention.

That is, the present invention provides a polymer electrolyte emulsion shown in the following [1].
[1] A polymer electrolyte emulsion wherein polymer electrolyte particles are dispersed in a dispersing medium, wherein a polymer electrolyte contained in the polymer electrolyte particle is a block copolymer consisting of a segment having an acidic group and a segment without substantially ion exchange group.
   Further, the present invention provides the following [2] to [5] as an aspect regarding a preferable polymer electrolyte which is applied to [1].
[2] The polymer electrolyte emulsion according to [1], wherein a volume average particle diameter obtained by a dynamic light scattering method is 100 nm to 200 µm.
[3] The polymer electrolyte emulsion according to [1] or [2], wherein the polymer electrolyte is an aromatic hydrocarbon-based polymer.
[4] The polymer electrolyte emulsion according to any one of [1] to [3], wherein the polymer electrolyte is a polymer electrolyte having a segment represented by the following formula (1), as the segment having an acidic group. 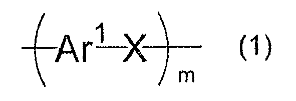 (wherein m represents an integer of 5 or more, Ar¹ is represents a divalent aromatic group, wherein the divalent aromatic group may have a substituent, a part or all of m Ar¹s has an acidic group, and X represents a direct bond or a divalent group)
[5] The polymer electrolyte emulsion according to any one of [1] to [4], wherein the polymer electrolyte is a polymer electrolyte having a segment represented by the following formula (3) as the segment without substantially ion exchange group. 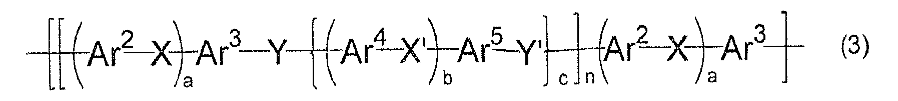 (wherein a, b and c each independently represent 0 or 1, n represents an integer of 5 or more, Ar², Ar³, Ar⁴ and Ar⁵ each independently represent a divalent aromatic group, wherein these divalent aromatic groups may be substituted with an alkyl group of a carbon number of 1 to 20 optionally having a substituent, an alkoxy group of a carbon number of 1 to 20 optionally having a substituent, an aryl group of a carbon number of 6 to 20 optionally having a substituent, an aryloxy group of a carbon number of 6 to 20 optionally having a substituent, an aryloxy group of a carbon number of 6 to 20 optionally having a substituent, an acyl group of a carbon number of 2 to 20 optionally having a substituent, or an optionally substituted arylcarbonyl group. X and X' each independently represent a direct bond or a divalent group, and Y and Y' each independently represent an oxygen atom or a sulfur atom)
   In addition, the present invention provides the following [6] to [11] using the polymer electrolyte emulsion according to any one of [1] to [5].
[6] The polymer electrolyte emulsion according to any one of [1] to [5], which is used for an electrode of a polymer electrolyte fuel cell.
[7] The polymer electrolyte emulsion according to [6], wherein, a content of a good solvent of the polymer electrolyte is 200 ppm or less.
[8] A catalyst composition comprising the polymer electrolyte emulsion according to any one of [1] to [7], and a catalyst component.
[9] An electrode for a polymer electrolyte fuel cell comprising the catalyst composition according to [8].
[10] A membrane electrode assembly having the electrode for a polymer electrolyte fuel cell according to [9].
[11] A polymer electrolyte fuel cell having the membrane electrode assembly according to [10].

According to the catalyst ink using the polymer electrolyte emulsion of the present invention, an electrode for manufacturing MEA having excellent electric generation performance can be provided. Since such the MEA can provide a fuel cell excellent in electric generation performance, it is industrially extremely useful.

### Brief description of the drawings

Fig.1 is a view schematically showing a presumed structure of the polymer electrolyte particle.
Fig. 2 is a view schematically showing a cross-sectional construction of a fuel cell of a preferable embodiment.

### Explanation of symbols

1···Segment having acidic group
2···Segment without substantially ion exchange group
10···Fuel cell, 12···Ion conductive membrane,
14a, 14b···Catalyst layer, 16a, 16b···Gas diffusion layer,
18a, 18b···Separator, 20···MEA

### Best Mode for Carrying Out the Invention

A preferable embodiment of the present invention will be explained below.

### <Polymer electrolyte>

First, a polymer electrolyte suitable for application to the polymer electrolyte emulsion of the present invention will be explained. In the polymer electrolyte emulsion of the present invention, a polymer electrolyte having an acidic group as the ion exchange group is used. When the polymer electrolyte having such the acidic group is used, it becomes possible to obtain a fuel cell having further excellent electric generation performance as compared with the polymer electrolyte having a basic group.

Examples of the acidic group include a sulfonic acid group (-SO₃H), a carboxyl group (-COOH), a phosphoric acid group (-PO(OH)₂), a phosphinic acid group (-POH(OH)), a sulfonimide group (-SO₂NHSO₂-), a phenolic hydroxy group (-Ph(OH) (Ph represents a phenyl group)) and the like. Among them, a sulfonic acid group or a phosphoric acid group is more preferable, and a sulfonic acid group is further preferable.

The polymer electrolyte which is applied to the present invention is a block copolymer consisting of a segment having an acidic group, and a segment without substantially ion exchange group. This polymer electrolyte may be a block copolymer having each one of these segments, a block copolymer having two or more of any one of segments, or a multiblock copolymer having two or more of both segments.

An aqueous dispersion described in JP-A No.2005-132996, for manufacturing an electrode material, is such that a polymer electrolyte obtained from the disclosed manufacturing process is a random polymer in which a sulfonic acid group (ion exchange group) is randomly introduced in a molecule, although not explicitly shown.

The present inventors studied a polymerization sequence of such the polymer electrolyte in detail and, surprisingly, found out that when an electrode is manufactured from a polymer electrolyte emulsion using a block copolymer consisting of the segment having an acidic group, and the segment without substantially ion exchange group, electric generation performance can be more improved than the previously disclosed aqueous dispersion. This reason is not clear, but is presumed as follows: An emulsion containing the block copolymer as a polymer electrolyte particle, manifests a form in which a segment having an acidic group becomes dense on a surface of each particle, and a segment without substantially ion exchange group becomes dense in the interior thereof, and an electrode obtained from such the emulsion becomes a form in which particles having a dense ion exchange group involved in an electrode reaction are connected, therefore, an electrode reaction is effectively generated, and excellent electric generation performance is obtained.

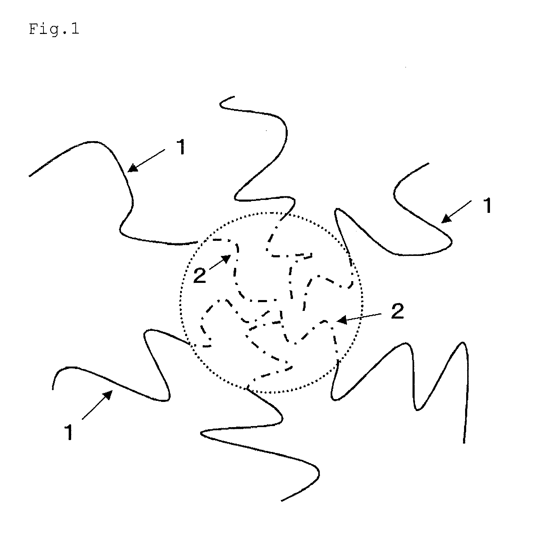

Such the presumption will be explained using Fig.1. Fig.1 is a presumption schematic view showing the polymer electrolyte particle formed in the case of a diblock copolymer consisting of a block 1 having an acidic group expressed by a solid line, and a block 2 without substantially ion exchange group expressed by a dashed-dotted line. If the block 2 is aggregated at a particle center part, and there is the block 1 towards a particle surface, since the block 1 involved in an electrode reaction of an electrode for a fuel cell described later is present on a particle surface, this is presumed to contribute to high electric generation performance. Previously, a polymer electrolyte emulsion based on such the idea has not been disclosed at all.

The segment 'having an acidic group' means that many of repeating units mainly constituting the segment have an acidic group. Specifically, it is a segment in which the acidic group is contained at the number of 0.5 or more, as calculated as an average per one repeating unit constituting such the segment. As such the segment having an ion exchange group, a segment in which the acidic group is contained at the number of 1.0 or more per one repeating unit constituting the segment is more preferable.

The segment 'without substantially ion exchange group' means that many of repeating units mainly constituting such the segment have no ion exchange group (an acidic group and a basic group), specifically, is a segment in which the number of the ion exchange group is 0.1 or less, calculated as an average per one repeating unit constituting the segment. As such the segment without substantially ion exchange group, it is preferable that the number of the ion exchange group per one repetition group constituting the segment is 0.05 or less, and it is further preferable that all of repeating units constituting the segment have no ion exchange group.

Examples of a representative of the segment without substantially ion exchange group include (A) a segment having a main chain consisting of an aliphatic hydrocarbon chain; (B) a segment in which all or a part of hydrogen atoms of an aliphatic hydrocarbon chain are substituted with fluorine atoms; (C) a segment having a main chain consisting of a polymer chain having aromatic rings; (D) a segment consisting of a polymer chain containing substantially no carbon atom in a main chain, such as polysiloxane, and polyphosphazene; (E) a segment consisting of a polymer chain containing a nitrogen atom on a main chain or a side chain.

On the other hand, examples of a representative of the segment having acidic groups include (F) a segment in which the acidic group is introduced in a polymer chain having a main chain consisting of an aliphatic hydrocarbon; (G) a segment in which the acidic group is introduced in a polymer chain, all or a part of hydrogen atoms of an aliphatic hydrocarbon of which are substituted with fluorine atoms; (H) a segment in which acidic groups are introduced in a polymer chain having a main chain having aromatic rings; (I) a segment consisting of a polymer chain without substantially carbon atom on a main chain such as polysiloxane and polyphosphazene, in which the acidic group is introduced in the polymer chain; (J) a segment consisting of a polymer chain containing nitrogen atoms on a main chain such as polybenzimidazole, in which the acidic group binds to the main chain directly or via side chains, and (K) a segment consisting of a polymer chain containing nitrogen atoms on a main chain such as polybenzimidazole, in which acidic compounds such as sulfuric acid and phosphoric acid is introduced by an ionic bond.

In the polymer electrolyte of the present invention, there is exemplified a block copolymer having at least one segment selected from (A) to (E) as the segment without substantially ion exchange group, and at least one segment selected from (F) to (K) as the segment having acidic groups, respectively. A combination of these segments is not particularly limited, but in order to further enhance the effect of the present invention, as the segment without substantially ion exchange group, the block copolymer having a segment of (C) is preferable and, as the segment having an acidic group, the block copolymer having a segment of (H) is preferable, and a block copolymer having both of the segment represented by (C) and the segment of (H), that is, an aromatic hydrocarbon-based polymer electrolyte is more preferable. Herein, the 'aromatic hydrocarbon-based polymer' is a form in which a main chain constituting such the polymer is such that mainly an aromatic ring is connected directly or via a divalent group, and means that a weight fraction of fluorine atoms is 15% by weight or less in an element composition constituting the polymer.

Among the foregoing, the block copolymer having both of the segment represented by the (C) and the segment being (H) which is a preferable block copolymer will be explained in detail.

Examples of the segment represented by (H) include a segment represented by the following formula (1). 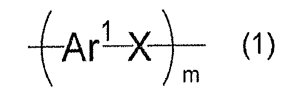 (wherein m represents an integer of 5 or more, Ar¹ represents a divalent aromatic group, wherein the divalent aromatic group may have substituents, a part or all of m Ar¹s have acidic groups, and X represents a direct bond or a divalent group)

Herein, m in the formula (1) represents an integer of 5 or more, preferably in a range of 5 to 1000, further preferably 10 to 1000, particularly preferably 20- to 500. When a value of m is 5 or more, ion conductivity manifested by such the segment becomes insufficient, and electric generation performance can be more improved, being preferable as a member for a fuel cell. When a value of m is 1000 or less, manufacturing is easier, being preferable.

Ar¹ in the general formula (1) represents a divalent aromatic group. Examples of the divalent aromatic group include divalent monocyclic aromatic groups such as a 1,3-phenylene group, a 1,4-phenylene group and the like, divalent condensed ring-based aromatic groups such as a 1,3-naphthalenediyl group, a 1,4-naphthalenediyl group, a 1,5-naphthalenediyl group, a 1,6-naphthalenediyl group, a 1,7-naphthalenediyl group, a 2,6-naphthalenediyl group, and a 2,7-naphthalenediyl group, divalent aromatic heterocyclic groups such as a pyridinediyl group, a quinoxalinediyl group, and a thiophenediyl group, and the like. Preferable is a divalent monocyclic aromatic group. In addition, the segment represented by the general formula (1) has acidic groups in a part or all of Ar¹, and such the acidic group may bind to an aromatic ring present in Ar¹ directly, or bind thereto via a divalent group as a spacer, or may be a combination thereof.

In addition, Ar¹ may be substituted with alkyl groups of a carbon number of 1 to 20 optionally having a substituent, an alkoxy group of a carbon number of 1 to 20 optionally having a substituent, an aryl group of a carbon number of 6 to 20 optionally having a substituent, an aryloxy group of a carbon number of 6 to 20 optionally having a substituent, or an acyl group of a carbon number of 2 to 20 optionally having a substituent.

Herein, examples of the alkyl group of a carbon number of 1 to 20 optionally having a substituent include alkyl groups of a carbon number of 1 to 20 such as a methyl group, an ethyl group, a n-propyl group, an isopropyl group, a n-butyl group, a sec-butyl group, an isobutyl group, a n-pentyl group, a 2,2-dimethylpropyl group, a cyclopentyl group, a n-hexyl group, a cyclohexyl group, a 2-methylpentyl group, a 2-ethylhexyl group, a nonyl group, a dodecyl group, a hexadecyl group, an octadecyl group, and an icosyl group, and alkyl groups in which these groups are substituted with a fluorine atom, a hydroxyl group, a nitrile group, an amino group, a methoxy group, an ethoxy group, an isopropyloxy group, a phenyl group, a naphthyl group, a phenoxy group, or a naphthyloxy group, and a total carbon number thereof is 20 or less.

In addition, examples of the alkoxy group of a carbon number of 1 to 20 optionally having a substituent include alkoxy groups of a carbon number of 1 to 20 such as a methoxy group, an ethoxy group, a n-propyloxy group, an isopropyloxy group, a n-butyloxy group, a sec-butyloxy group, a tert-butyloxy group, an isobutyloxy group, a n-pentyloxy group, a 2,2-dimethylpropyloxy group, a cyclopentyloxy group, a n-hexyloxy group, a cyclohexyloxy group, a 2-methylpentyloxy group, a 2-ethylhexyloxy group, a dodecyoxy group, a hexadecyloxy group, and an icosyloxy group, and alkoxy groups in which these groups are substituted with a fluorine atom, a hydroxyl group, a nitrile group, an amino group, a methoxy group, an ethoxy group, an isopropyloxy group, a phenyl group, a naphthyl group, a phenoxy group, or a naphthyloxy group, and a total carbon number thereof is 20 or less.

Examples of the aryl group of a carbon number of 6 to 20 optionally having a substituent include aryl groups such as a phenyl group, a naphthyl group, a phenanthrenyl group, and an anthracenyl group, and aryl groups in which these groups are substituted with a fluorine atom, a hydroxyl group, a nitrile group, an amino group, a methoxy group, an ethoxy group, an isopropyloxy group, a phenyl group, a naphthyl group, a phenoxy group, or a naphthyloxy group, and a total carbon number thereof is 20 or less.

Examples of the aryloxy group of a carbon number of 6 to 20 optionally having a substituent include aryloxy groups such as a phenoxy group, a naphthyloxy group, a phenanthrenyloxy group, and an anthracenyloxy group, and aryloxy groups in which these groups are substituted with a fluorine atom, a hydroxyl group, a nitrile group, an amino group, a methoxy group, an ethoxy group, an isopropyloxy group, a phenyl group, a naphthyl group, a phenoxy group, or a naphthyloxy group, and a total carbon number thereof is 20 or less.

Examples of the acyl group of a carbon number of 2 to 20 optionally having a substituent include acyl groups of a carbon number of 2 to 20 such as an acetyl group, a propionyl group, a butyryl group, an isobutyryl group, a benzoyl group, a 1-naphthoyl group, and a 2-naphthoyl group, and acyl groups in which these groups are substituted with a fluorine atom, a hydroxyl group, a nitrile group, an amino group, a methoxy group, an ethoxy group, an isopropyloxy group, a phenyl group, a naphthyl group, a phenoxy group, or a naphthyloxy group, and a total carbon number thereof is 20 or less.

The segment represented by the formula (1) will be specifically exemplified below. Examples include a structural unit selected from (B-1) to (B-13) in which X is an oxygen atom, (C-1) to (C-11) in which Ar¹ is an aromatic group such that two aromatic rings are bound with a sulfonyl group, a carbonyl group or a hydrocarbon group, and (D-1) to (D-6) in which X is a sulfur atom, and examples include segments in which m of them are bound to form a segment, and such the segment has at least 0.5×m or more acidic groups. In the following exemplification, -Ph indicates a phenyl group.

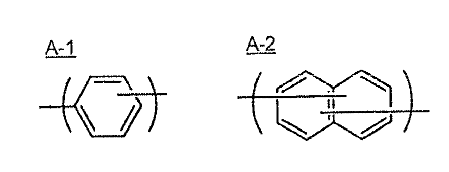

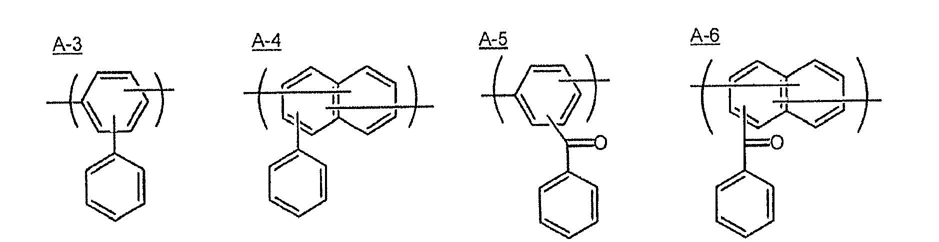

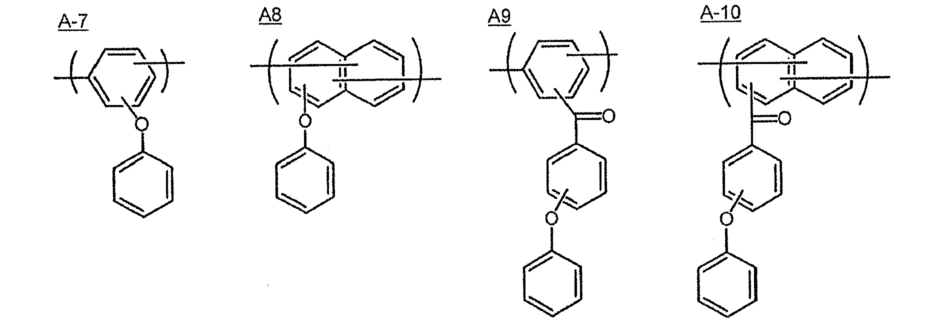

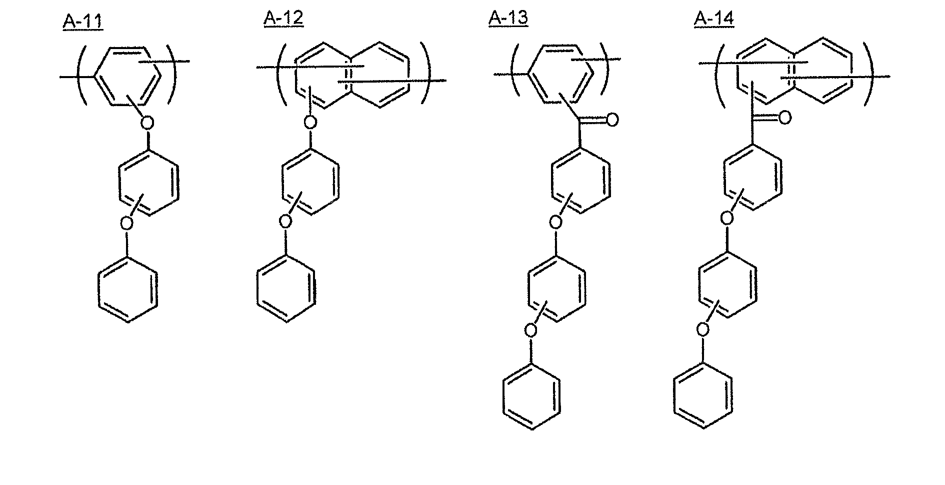

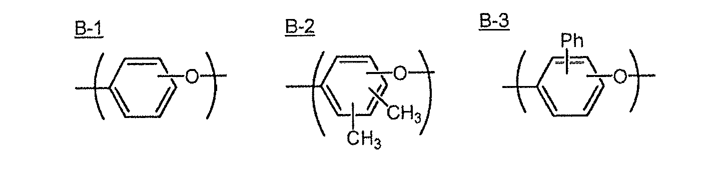

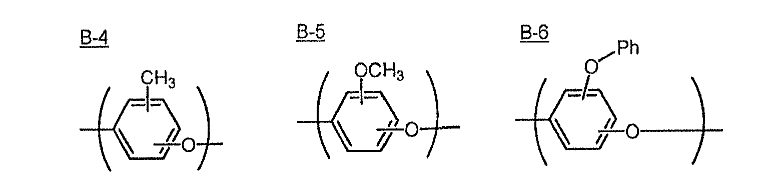

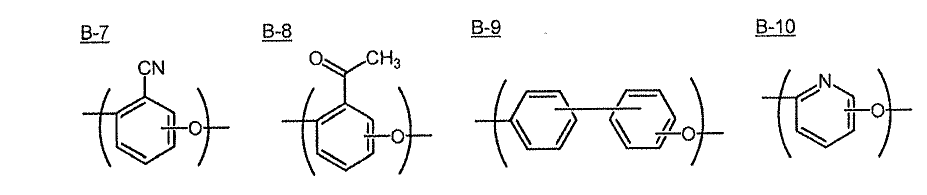

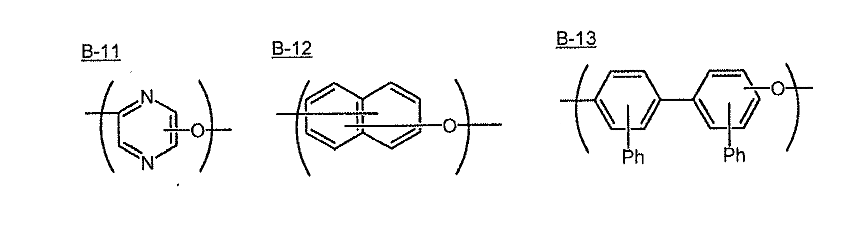

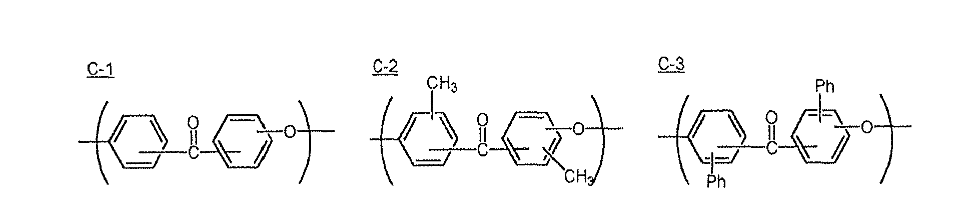

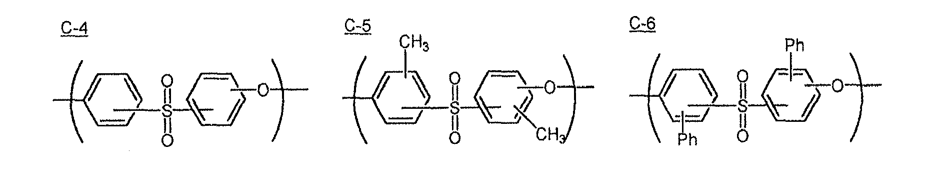

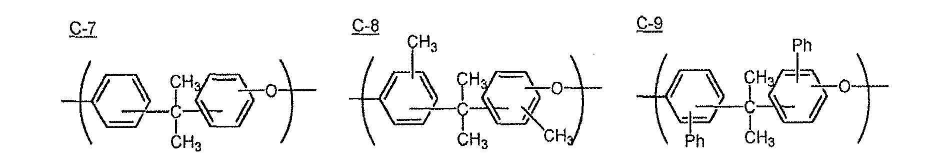

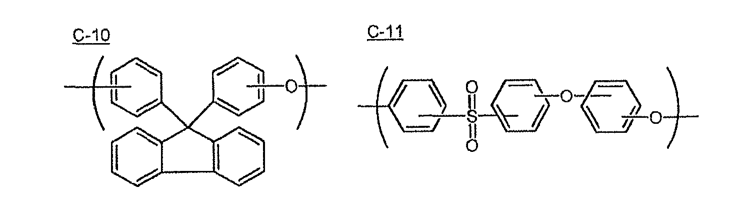

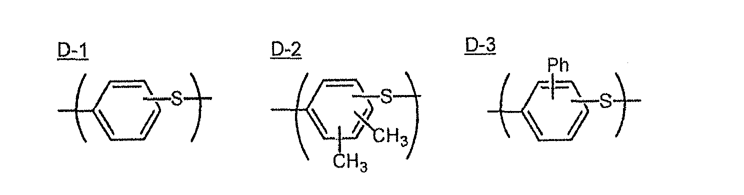

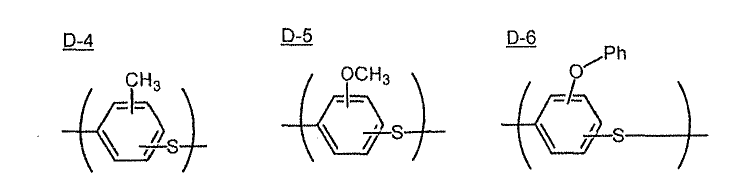

In the above-exemplified structural units, the structural unit having an acidic group means that an acidic group, and at least one group having an acidic group selected from the group consisting of those exemplified in the following formula (2) are bound to an aromatic ring present in such the structural units. 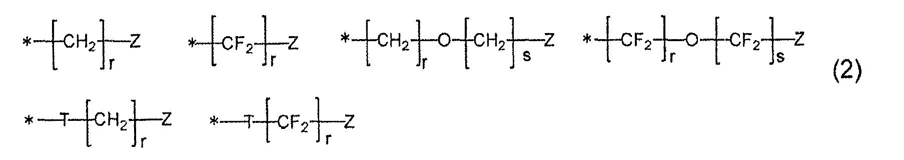 (in the above formulae, Z is an acidic group, r and s each are independently an integer of 0 to 12, T represents any of an oxygen atom, a sulfur atom, a carbonyl group, and a sulfonyl group, and * represents a bond)

As the structural unit constituting the segment having an acidic group exemplified above, (A-1), (A-2), (A-5), (A-9), (A-13), (B-1), (B-12), (C-1), (C-4), (C-7), (C-10), or (C-11) is preferable, (A-1), (A-2), (A-5), (A-10), (C-1), or (C-11) is further preferable, and (A-1), (A-2) or (A-10) is particularly preferable. A segment in which m of these structural units are connected and, in such the segment, (0.5×m) or more of structural units have an acidic group is preferable, and it is particularly preferable that m all structural units have an acidic group.

On the other hand, a preferable segment without substantially ion exchange group is a segment represented by the following formula (3). 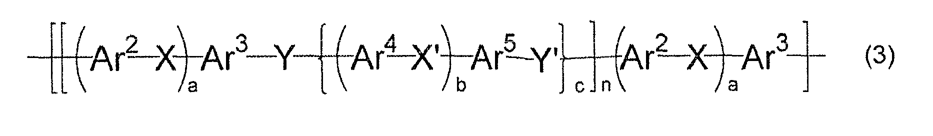 (wherein a, b and c each represent independently 0 or 1, n represents an integer of 5 or more, Ar², Ar³, Ar⁴ and Ar⁶ each represent independently a divalent aromatic group, wherein these divalent aromatic groups may be substituted with an alkyl group of a carbon number of 1 to 20 optionally having a substituent, an alkoxy group of a carbon number of 1 to 20 optionally having a substituent, an aryl group of a carbon number of 6 to 20 optionally having a substituent, an aryloxy group of a carbon number of 6 to 20 optionally having a substituent, an acyl group of a carbon number of 2 to 20 optionally having a substituent, or an optionally substituted arylcarbonyl group, X and X' each represent independently a direct bond or a divalent group, and X and X' each represent independently an oxygen atom or a sulfur atom)

Herein, a, b and c in the formula (3) each represent independently 0 or 1. And, n represents an integer of 5 or more, preferably 5 to 200. Since when a value of n is too small, a problem easily arises that water resistance and durability are insufficient, and n is particularly preferably 10 or more.

In addition, Ar², Ar³, Ar⁴, and Ar⁵ in the formula (3) each represent independently a divalent aromatic group. Examples of the divalent aromatic group include the same groups as those exemplified for Ar¹.

In addition, Ar², Ar³ and Ar⁴ may be substituted with an alkyl group of a carbon number of 1 to 20 optionally having a substituent, an alkoxy group of a carbon number of 1 to 20 optionally having a substituent, an aryl group of a carbon number of 6 to 20 optionally having a substituent, an aryloxy group of a carbon number of 6 to 20 optionally having a substituent, an acyl group of a carbon number of 2 to 20 optionally having a substituent, or an arylcarbonyl group of a carbon number of 2 to 20 optionally having a substituent, and examples of them include those exemplified in Ar¹.

Y and Y' in the formula (3) each represent independently an oxygen atom or a sulfur atom. In addition, X and X' in the formula (3) each represent independently a direct bond or a divalent group, among them, preferably a carbonyl group, a sulfonyl group, a 2,2-isopropylidene group, or a 9,9-fluorenediyl group.

Preferable representative examples of the structural unit represented by the formula (3) include the following units. And, n has the same meaning as that of the general formula (3).

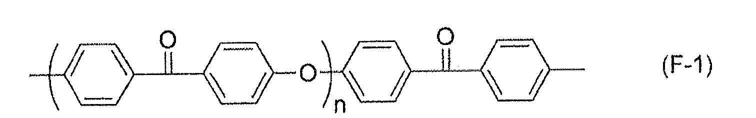

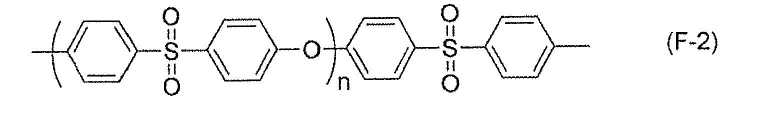

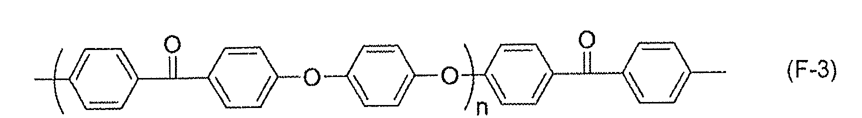

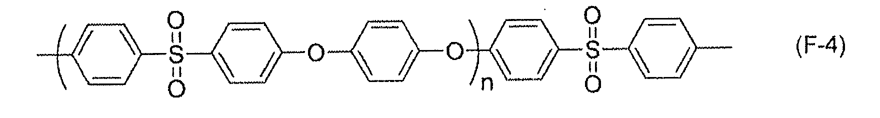

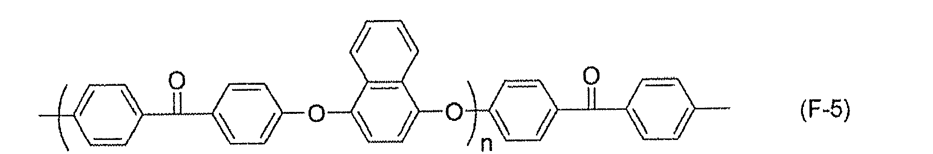

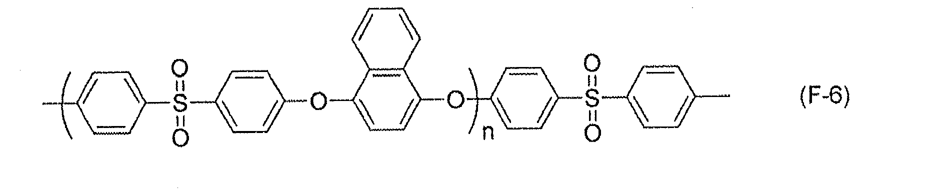

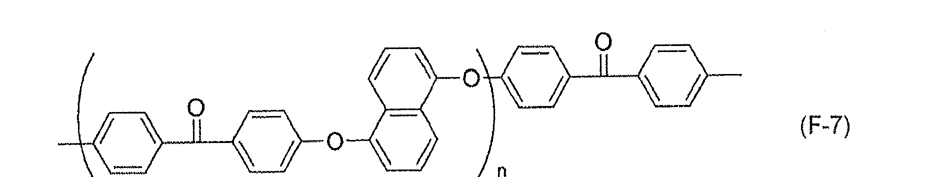

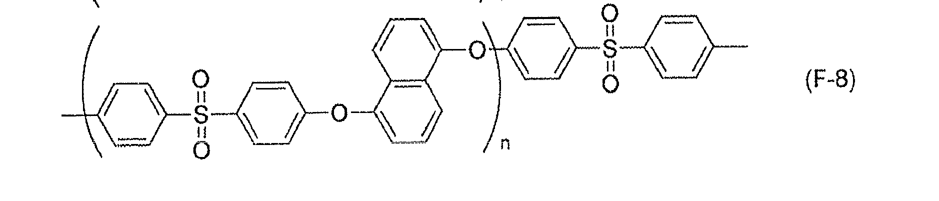

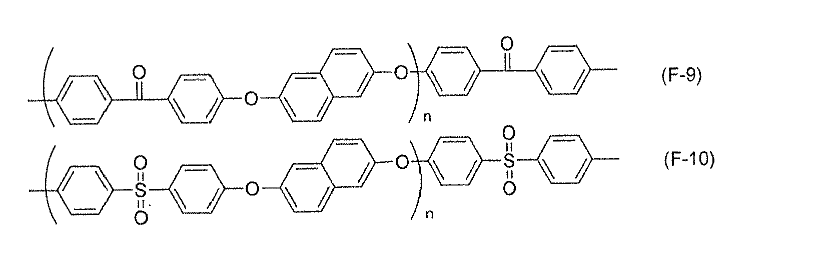

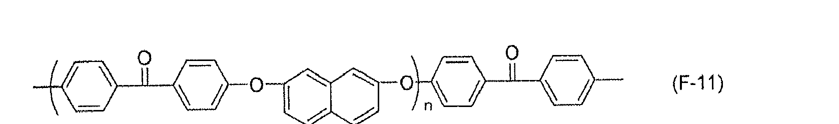

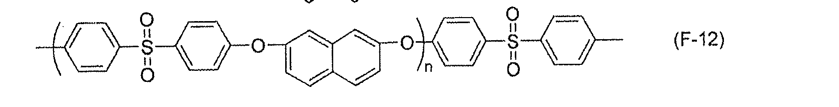

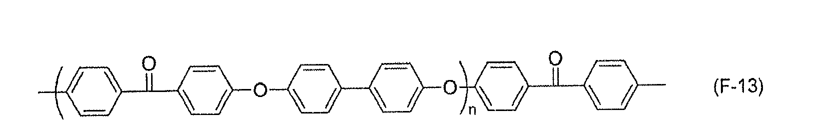

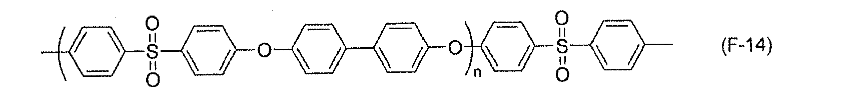

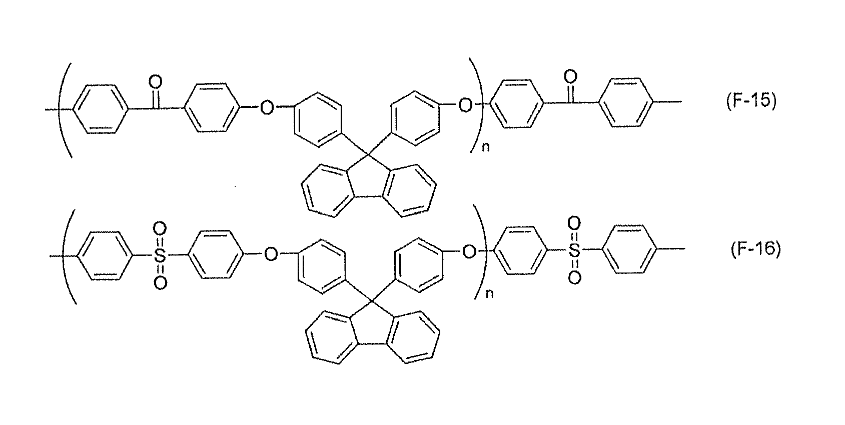

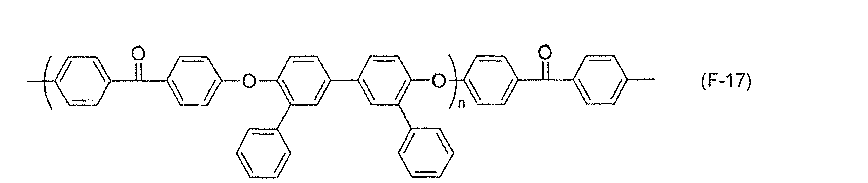

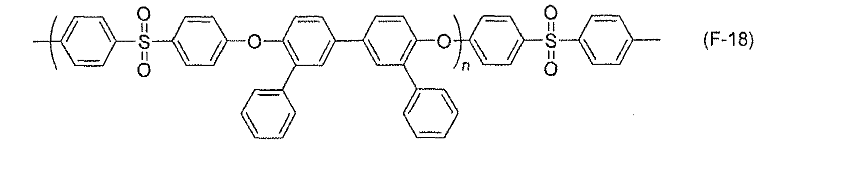

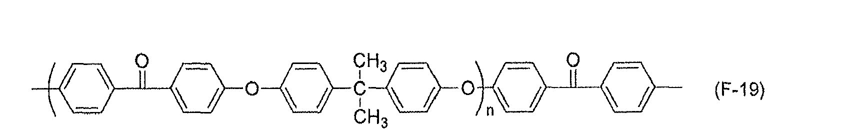

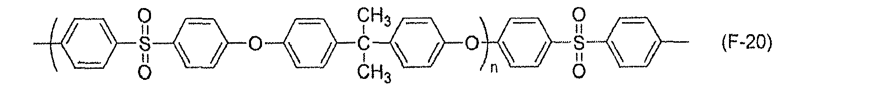

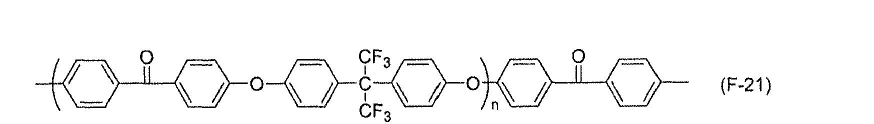

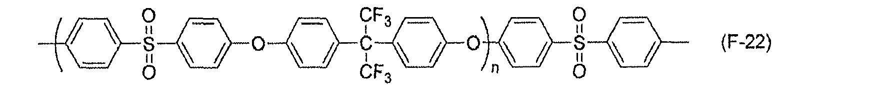

Specifically, examples of a preferable block copolymer applied to the present invention include (H-1) to (H-50) shown in the following Table 1, Table 2 and Table 3.

**Table 1**

| Block copolymer | Segment having acidic Segment having acidic group | Segment without substantially ion exchange group |
|---|---|---|
| (H-1) | (A-1) | (F-1) |
| (H-2) | (A-1) | (F-2) |
| (H-3) | (A-1) | (F-3) |
| (H-4) | (A-1) | (F-4) |
| (H-5) | (A-1) | (F-9) |
| (H-6) | (A-1) | (F-10) |
| (H-7) | (A-1) | (F-19) |
| (H-8) | (A-1) | (F-20) |
| (H-9) | (A-1) | (F-21) |
| (H-10) | (A-1) | (F-22) |
| (H-11) | (A-5) | (F-1) |
| (H-12) | (A-5) | (F-2) |
| (H-13) | (A-5) | (F-3) |
| (H-14) | (A-5) | (F-4) |
| (H-15) | (A-5) | (F-9) |
| (H-16) | (A-5) | (F-10) |
| (H-17) | (A-5) | (F-19) |
| (H-18) | (A-5) | (F-20) |
| (H-19) | (A-5) | (F-21) |
| (H-20) | (A-5) | (F-22) |

**Table 2**

| Block copolymer | Segment having acidic group | Segment without substantially ion exchange group |
|---|---|---|
| (H-21) | (A-9) | (F-1) |
| (H-22) | (A-9) | (F-2) |
| (H-23) | (A-9) | (F-3) |
| (H-24) | (A-9) | (F-4) |
| (H-25) | (A-9) | (F-9) |
| (H-26) | (A-9) | (F-10) |
| (H-27) | (A-9) | (F-19) |
| (H-28) | (A-9) | (F-20) |
| (H-29) | (A-9) | (F-21) |
| (H-30) | (A-9) | (F-22) |
| (H-31) | (A-13) | (F-1) |
| (H-32) | (A-13) | (F-2) |
| (H-33) | (A-13) | (F-3) |
| (H-34) | (A-13) | (F-4) |
| (H-35) | (A-13) | (F-9) |
| (H-36) | (A-13) | (F-10) |
| (H-37) | (A-13) | (F-19) |
| (H-38) | (A-13) | (F-20) |
| (H-39) | (A-13) | (F-21) |
| (H-40) | (A-13) | (F-22) |

**Table 3**

| Block copolymer | Segment having acidic group | Segment without substantially ion exchange group |
|---|---|---|
| (H-41) | (C-11) | (F-1) |
| (H-42) | (C-11) | (F-2) |
| (H-43) | (C-11) | (F-3) |
| (H-44) | (C-11) | (F-4) |
| (H-45) | (C-11) | (F-9) |
| (H-46) | (C-11) | (F-10) |
| (H-47) | (C-11) | (F-19) |
| (H-48) | (C-11) | (F-20) |
| (H-49) | (C-11) | (F-21) |
| (H-50) | (C-11) | (F-22) |

Inter alia, examples of a preferable block copolymer include:

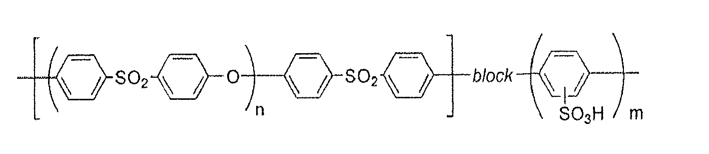

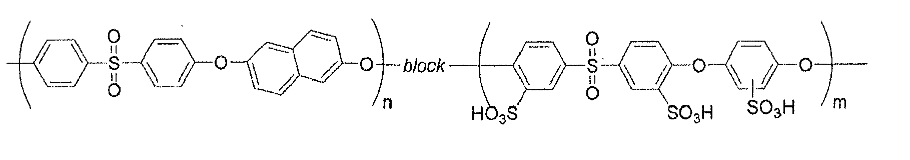

An existence ratio of the block having an acidic group forming the block copolymer, and the block without substantially ion exchange group can be optimized depending on a kind of each block and, preferably, the block having an acidic group relative to a total weight of the polymer electrolyte is in a range of 30% by weight to 60% by weight.

### <Average particle diameter>

An average particle diameter of a particle contained in the polymer electrolyte emulsion of the present invention is preferably in a range of 100 nm to 200 µm as expressed by a volume average particle diameter obtained by measurement based on a dynamic light scattering method. Such the average particle diameter is preferably in a range of 150 nm to 10 µm, further preferably in a range of 200 nm to 1 µm. When an average particle diameter of the polymer electrolyte particle is in the aforementioned range, the resulting polymer electrolyte emulsion becomes to have practical storage stability, and has an advantage that, when a film is formed, uniformity of the film becomes comparatively good. In addition, the particle is a concept including all which are dispersed in the polymer electrolyte emulsion in a particle-like, such as a particle containing a polymer electrolyte and an additive, a particle consisting of an additive and the like when an additive described later is used, including a polymer electrolyte particle consisting of a polymer electrolyte.

### <Polymer electrolyte emulsion>

A method of preparing the polymer electrolyte emulsion of the present invention is not particularly limited in such a range that a polymer electrolyte particle consisting of a polymer electrolyte can be dispersed in a dispersing medium. One example includes a method of preparation by dissolving a polymer electrolyte in a good solvent of the polymer electrolyte to obtain a polymer electrolyte solution, then, adding dropwise this polymer electrolyte solution to another solvent (poor solvent of the polymer electrolyte) which is a dispersing medium of an emulsion, thereby, precipitating/dispersing a polymer electrolyte particle in the poor solvent to obtain a polymer electrolyte dispersion. Further, a step of removing the good solvent contained in the resulting polymer electrolyte dispersion using membrane separation with a dialysis membrane and, further, concentration of the polymer electrolyte dispersion by distillation to adjust a concentration of the polymer electrolyte particle can be shown as a preferable preparation method. By this method, a polymer electrolyte emulsion can be prepared from every polymer electrolyte. In the exemplified preparation method, the 'good solvent' and the 'poor solvent' are defined by a weight of a polymer electrolyte which can be dissolved in 100 g of a solvent at 25 °C, the good solvent is a solvent in which 0.1 g or more of a polymer electrolyte is soluble, and the poor solvent is a solvent in which only 0.05 g or less of a polymer electrolyte is soluble. A remaining amount of the polymer electrolyte emulsion in the good solvent is preferably 200 ppm or less, further preferably 100 ppm or less, more preferably 50 ppm or less, and particularly preferably, the good solvent used in a step of preparing a polymer electrolyte solution is removed to such an extent that the good solvent is not substantially contained in the polymer electrolyte emulsion obtained via such the membrane separation.

### <Dispersing medium>

The poor solvent which disperses the polymer electrolyte particle is not particularly limited as far as dispersing stability of the polymer electrolyte to be applied is not inhibited, but water, an alcohol-based solvent such as methanol and ethanol, a non-polar organic solvent such as hexane and toluene, or a mixture thereof is used. However, from a viewpoint of reduction in the environmental load when industrially used, water or a solvent containing water as a main component is preferably used.

### <Concentration of polymer electrolyte>

A concentration of the polymer electrolyte of the polymer electrolyte solution of the present invention is suitably 0.1 to 10% by weight. Herein, a concentration of the polymer electrolyte is defined by a value of a total weight of the applied polymer electrolyte divided by a total weight of the resulting polymer electrolyte emulsion. The concentration of the polymer electrolyte is preferably 0.5 to 5% by weight, further preferably 1 to 2% by weight. When the concentration of the polymer electrolyte is in the aforementioned range, since a large amount of the solvent is not required in order to form a film, this is effective, and excellent in coating property, being preferable.

### <Emulsifier>

In order to impart better dispersing stability, an emulsifier may be added to the polymer electrolyte emulsion of the present invention in such a range that the effect intended by the present invention is not deteriorated. As a surfactant used as the emulsifier, any of anionic surfactants such as alkyl sulfate ester (salt), alkylaryl sulfate ester (salt), alkyl phosphate ester (salt), and fatty acid (salt); cationic surfactants such as an alkyl amino salt, and an alkyl quaternary amine salt; nonionic surfactants such as polyoxyethylene alkyl ether, polyoxyethylene alkyl aryl ether, and block-type polyether; amphoteric surfactants such as a carboxylic acid type (e.g. amino acid-type, a betaine acid-type etc.), and a sulfonic acid type, and reactive emulsifiers such as LATEMUL S-180A [manufactured by Kao Corporation], ELEMINOL JS-2 [manufactured by Sanyo Chemical Industries, Ltd.], Aquaron HS-10, KH-10 [manufactured by Dai-ichi Kogyo Seiyaku Co., Ltd.], Adekalia Soap SE-10N, SR-10 [manufactured by ADEKA], and Antox MS-60 [manufactured by Nippon Nyukazai Co., Ltd.] as expressed by a trade name can be used.

Among the polymer having a hydrophilic group, a polymer which is soluble in a dispersing medium, and has the dispersing function can be used as an emulsifier. Examples of such the polymer include a styrene/maleic acid copolymer, a styrene/acrylic acid copolymer, polyvinyl alcohol, polyalkylene glycol, sulfonated polyisoprene, a sulfonated hydrogenated styrene/butadiene copolymer, a sulfonated styrene/maleic acid copolymer, and a sulfonated styrene/acrylic acid copolymer. Particularly, by using a polymer having a sulfonic acid group as an acid type as it is, volume resistance can be reduced. Examples of such the polymer include sulfonated polyisoprene, a sulfonated hydrogenated styrene/butadiene copolymer, a sulfonated styrene/ maleic acid copolymer, and a sulfonated styrene/acrylic acid copolymer.

These emulsifiers can be used alone, or two or more kinds may be used together. When the emulsifier is used, the emulsifier is used usually at 0.1 to 50 parts by weight relative to 100 parts by weight of the emulsion. A use amount of such the emulsifier is preferably 0.2 to 20 parts by weight, further preferably 0.5 to 5 parts by weight. When a use amount of the emulsifier is in this range, dispersing stability of the polymer electrolyte particle is improved and, at the same time, handling such as suppressing of foaming and the like becomes good, being preferable.

### <Other additive>

Thus, the polymer electrolyte emulsion of the present invention can be prepared, and the polymer electrolyte emulsion of the present invention may contain other additive such as inorganic or organic particles, adhesion aids, sensitizers, leveling agents, and coloring agents. In addition, such the additive may be contained in the polymer electrolyte particle constituting the polymer electrolyte emulsion, or may be dissolved in a dispersing medium, or may be present as a fine particle consisting of other component, separately from the polymer electrolyte particle, as already described.

### <Utility>

The polymer electrolyte emulsion of the present invention is preferable as a binder resin for manufacturing a polymer electrolyte fuel cell, and can be also applied to various utilities such as a polymer electrolyte membrane, and other coating agent and binder resin. Alternatively, when used in such the utility, other polymer may be used together from a viewpoint of design of physical properties. Examples of other polymer include the known polymers such as a urethane resin, an acryl resin, a polyester resin, a polyamide resin, polyether, polystyrene, polyesteramide, polycarbonate, polyvinyl chloride, and a diene-based polymer such as SBR and NBR.

### <Film forming method>

The polymer electrolyte emulsion of the present invention can afford a film having a good precision by various film forming methods. Examples of the film forming method include cast film molding, spray coating, brush coating, roll coater, flow coater, bar coater, and dip coater and, by using these film molding methods, coating the polymer electrolyte emulsion on a substrate and, if necessary, performing drying treatment or the like, a film can be formed. A coated film thickness is different depending on utility, and a dry film thickness is usually 0.01 to 1,000 µm, preferably 0.05 to 500 µm.

In addition, a substrate used in film formation is not particularly limited, but examples include polymer materials such as a polycarbonate resin, an acryl resin, an ABS resin, a polyester resin, polyethylene, polypropylene, and nylon, non-iron metals such as aluminum, copper, and dulalumin, steel plates such as stainless, and iron, carbon, a glass, a wood, a paper, gypsum, alumina, and a hardened inorganic body. A shape of the substrate is not particularly limited, but from a planar material to a porous material such as a non-woven fabric can be also used.

Further, when a catalyst layer of a polymer electrolyte fuel cell which is suitable utility of the polymer electrolyte emulsion is manufactured, it is also possible to manufacture a form in which an ion conductive membrane and the catalyst layer are connected, by coating the polymer electrolyte emulsion, or a catalyst ink obtained by mixing the polymer electrolyte emulsion and a catalyst component, on the ion conductive membrane, and details of such the utility will be described later.

### <MEA>

Then, MEA manufactured by using the polymer electrolyte emulsion of the present invention will be explained. MEA of the present invention consists of an ion conductive (polymer electrolyte) membrane and a catalyst layer, and the catalyst layer is formed by coating a catalyst ink on the ion conductive membrane. Alternatively, when the catalyst ink is coated on a substrate capable of becoming a gas diffusion layer to obtain a laminate in which the gas diffusion layer and the catalyst layer are laminated and incorporated, and such the laminate is connected to the ion conductive membrane, MEA can be also obtained as a form having MEA of the present invention in the gas diffusion layer, so-called membrane electrode gas diffusion layer assembly (MEGA).

First, the ion conductive membrane will be explained. The ion conductive membrane contains a polymer electrolyte of the same block copolymer as that exemplified as the polymer electrolyte constituting the polymer emulsion, or a polymer electrolyte selected from the following exemplification, and has a membrane-like form. Like this, both of the ion conductive membrane, and the catalyst layer constituting MEA contain the polymer electrolyte, and such the polymer electrolytes may be the same or different.

In such the polymer electrolyte constituting the ion conductive membrane, examples other than the polymer electrolyte of the block copolymer include (A') a polymer electrolyte in which a sulfonic acid group and/or a phosphoric acid group are introduced in a hydrocarbon-based polymer having a main chain consisting of an aliphatic hydrocarbon; (B') a polymer in which all or a part of hydrogen atoms of an aliphatic hydrocarbon are substituted with a fluorine atom; (C') a hydrocarbon-based polymer electrolyte in which a sulfonic acid group and/or a phosphoric acid group are introduced in a polymer having a main chain having an aromatic ring; (D') a hydrocarbon-based polymer electrolyte in which a sulfonic acid group and/or a phosphoric acid group are introduced in a polymer consisting of an aliphatic hydrocarbon and an inorganic unit structure such as a siloxane group, and a phosphazene group; (E') a hydrocarbon-based polymer electrolyte in which a sulfonic acid group and/or a phosphoric acid group are introduced in a copolymer consisting of any two or more kinds of repeating units selected from repeating units constituting a polymer before introduction of the sulfonic acid group and/or the phosphoric acid group of (A') to (D'); (F') a hydrocarbon-based polymer electrolyte in which an acidic compound such as sulfuric acid and phosphoric acid is introduced in a hydrocarbon-based polymer containing a nitrogen atom on a main chain or a side chain with an unique bond.

Among the above-exemplified polymer electrolytes, from a viewpoint that both of high electric generation performance and durability are realized, polymer electrolytes of (C') and (E') are preferable, particularly, as the polymer electrolyte constituting the ion conductive membrane, a block copolymer is preferable, and a block copolymer having a polymer main chain having an aromatic ring, and a sulfonic acid group as an ion exchange group (ion conductive group) is preferable. Particularly preferable is a block copolymer consisting of a block having a sulfonic acid group, and a block without substantially ion exchange group.

Examples of such the block copolymer include a block copolymer having a sulfonated aromatic polymer block described in JP-A No.2001-250567, and a block copolymer having polyether ketone and polyether sulfone as a main chain structure described in patent literatures such as JP-A No.2003-31232, JP-A No.2004-359925, JP-A No.2005-232439, JP-A No.2003-113136 and the like.

Further, the ion conductive membrane may contain other components in such a range that proton conductivity is not remarkably reduced, depending on desired properties, in addition to the above-exemplified polymer electrolytes. Examples of such the other components include additives such as plasticizers, stabilizers, releasing agents, water retaining agents and the like which are used in normal polymers.

Particularly, when the aforementioned stabilizer is contained in the polymer electrolyte membrane, it enables to suppress deterioration due to a peroxide generated in an adjacent catalyst layer during operation of a fuel cell, being preferable.

In addition, in order to improve a mechanical strength of the ion conductive membrane, a composite membrane in which the polymer electrolyte and a predetermined support are complexed, may be used. Examples of the support include fibril-shaped or porous membrane-shaped substrates.

On the ion conductive membrane, a catalyst layer is formed using a catalyst ink consisting of the polymer electrolyte emulsion of the present invention.

Herein, the catalyst ink contains a catalyst substance as an essential component in addition to the polymer electrolyte emulsion of the present invention. As the catalyst substance, catalyst substances which have been used in the previous fuel cell can be used as they are, and examples include noble metals such as platinum and platinum-ruthenium alloy, and a complex-based electrode catalyst (described, for example, in 'Fuel Cell and Polymer' edited by The Society of Polymer Science, Japan Fuel Cell Material Conference, pp.103-112, Kyoritsu Shuppan Co., Ltd., published on November 10 in 2005). Further, from a viewpoint that transportation of a hydrogen ion and an electron in the catalyst layer can be facilitated, it is preferable to use an electrically conductive material supporting the catalyst substance on a surface. Examples of the electrically conductive material include electrically conductive carbon materials such as carbon black and a carbon nanotube, and ceramic materials such as titanium oxide.

Other component constituting the catalyst ink is arbitrary, and is not particularly limited, but a solvent may be added for the purpose of adjusting a viscosity of the catalyst ink. Alternatively, a water-repellant such as PTFE in order to enhance water repellency of the catalyst layer, a pore forming material such as calcium carbonate in order to enhance gas diffusivity of the catalyst layer and, further, a stabilizer such as metal oxide in order to enhance durability of MEA may be contained.

The catalyst ink is obtained by mixing the aforementioned components by the known method. Examples of the mixing method include an ultrasound dispersing device, a homogenizer, a ball mill, a planetary ball mill, a sand mill and the like.

Using the catalyst ink prepared as described above, the catalyst layer is formed on the ion conductive membrane. As such the forming method, the known technique can be applied, but the catalyst ink containing the polymer electrolyte emulsion of the present invention enables to form the catalyst layer having high collecting property to the ion conductive membrane, by directly coating on the ion conductive membrane, and performing drying treatment or the like.

The method of coating the catalyst ink is not particularly limited, but the existing method such as a die coater, screen printing, a spray method, and an ink jet method can be used.

### <Fuel cell>

Then, a fuel cell provided with MEA obtained by the manufacturing method of the present invention will be explained.

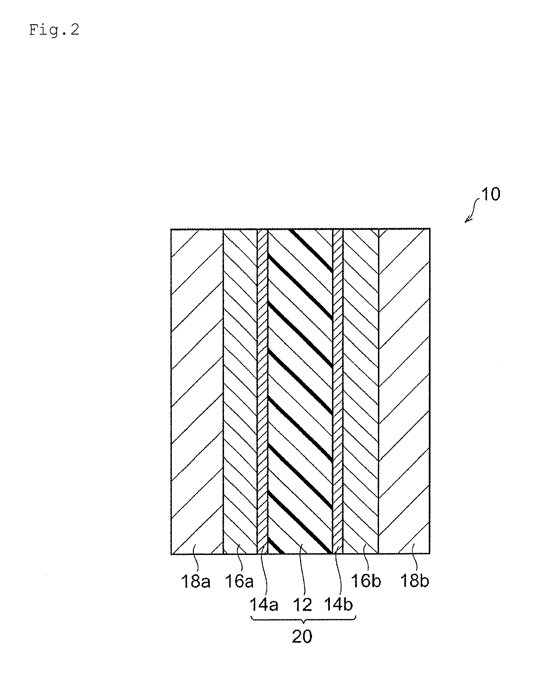

Fig.2 is a view showing schematically a cross-sectional construction of a fuel cell of a preferable embodiment. As shown in Fig.2, a fuel cell 10 is such that there are catalyst layers 14a,14b on both sides of an ion conductive membrane 12 so as to hold the membrane, and this is MEA20 obtained by the manufacturing method of the present invention. Further, catalyst layers on both sides are provided with gas diffusion layers 16a,16b, respectively, and separators 18a,18b are formed on the gas diffusion layer.

Herein, an entity provided with MEA 20 and gas diffusion layers 16a,16b is the aforementioned MEGA.

Herein, catalyst layers 14a,14b are a layer functioning as an electrode in a fuel cell, and any one of them is to be an anode catalyst layer, and the other is to be a cathode catalyst layer.

Gas diffusion layers 16,16b are provided so as to hold both sides of MEA 20, and facilitate diffusion of a raw material gas to catalyst layers 14a,14b. It is preferable that the gas diffusion layers 16a,16b are constructed of a porous material having electric conductivity. For example, since a porous carbon non-woven fabric or carbon paper can effectively transport a raw material gas to catalyst layers 14a,14b, it is preferable.

Separators 18a,18b are formed of a material having electric conductivity, and examples of such the material include carbon, resin-molded carbon, titanium, stainless and the like. Such the separators 18a,18b are not shown, but it is preferable that a groove which is to be a flow path for a fuel gas or the like is formed on a catalyst layers 14a,14b side.

And, the fuel cell 10 can be obtained by holding the aforementioned MEGA with one pair of separators 18a,18b, and connecting them.

In addition, the fuel cell of the present invention is not necessarily limited to a fuel cell having the aforementioned construction, but may have arbitrarily a different construction in such a range that the gist thereof is not departed.

Alternatively, the fuel cell 10 may be such that a cell having the aforementioned structure is sealed with a gas sealer or the like. Further, plural of the fuel cells 10 of the above structure may be connected in series, and may be subjected to a practical use as a fuel cell stack. And, the fuel cell having such the construction can be operated as a polymer electrolyte fuel cell when a fuel is hydrogen, or as a direct methanol-type fuel cell when a fuel is an aqueous methanol solution.

The present invention will be explained in more detail below by way of Examples, but the present invention is not limited to these Examples.

### (Method of measuring weight average molecular weight)

A weight average molecular weight of the polymer electrolyte was calculated by performing measurement by gel permeation chromatography (JPC), and performing polystyrene conversion. Measuring conditions of GPC are as follows. GPC conditions
- GPC measuring apparatus manufactured by TOSOH HLC-8220
- Column manufactured by Shodex Two of AT-80Ms are connected in series.
- Column temperature 40°C
- Mobile phase solvent Dimethylacetamide (LiBr is added to 10 mmol/dm³)
- Solvent flow rate 0.5 mL/ min

### (Method of measuring ion exchange capacity)

A dry weight of the polymer electrolyte to be subjected to measurement was obtained using a halogen water percentage meter set at a heating temperature of 105°C. Then, this polymer electrolyte membrane was immersed in 5 mL of a 0.1 mol/L aqueous sodium hydroxide solution, 50 mL of ion-exchanged water was further added, and this was allowed to stand for 2 hours. Thereafter, to a solution in which this polymer electrolyte membrane had been immersed was gradually added 0.1 mol/L hydrochloric acid, thereby, titration was conducted to obtain a neutralization point. Then, from the dry weight of the polymer electrolyte membrane and an amount of hydrochloric acid necessary for the neutralization, an ion exchange capacity (unit: meq/g) of the polymer electrolyte membrane was calculated.

### (Method of measuring average particle diameter)

A particle diameter of a particle present in each emulsion was measured using a thick-system particle diameter analyzer, FPAR-1000 (manufactured by Otsuka Electronics Co., Ltd.). A measuring temperature is 30°C, an accumulation time is 30 min, and a wavelength of laser used in measurement is 660 nm. The resulting data was analyzed by the CONTIN method using an analysis software (FPAR system, VERSION5.1.7.2) attached to the apparatus to obtain a scattering intensity distribution, and a particle diameter having highest frequency was adopted as an average particle diameter.

### (Method of assessing electric generation performance)

Using a commercially available JARI standard cell, a cell for a fuel cell was manufactured. That is, a carbon separator in which a groove for a gas path had been cutting-processed was arranged on both outer sides of MEGA, a current collector and an end plate were further arranged on an outside thereof in this order, and these were secured with a bolt, thereby, a cell for a fuel cell having an effective membrane area of 25 cm² was assembled. While the resulting cell for a fuel cell was retained at 80°C, humidified hydrogen was supplied to an anode, and the humidified air was supplied to a cathode, respectively. Thereupon, a back pressure at a gas outlet of the cell was adjusted to be 0.1 MPaG. Humidification of each raw material gas was performed by passing the gas through a bubbler, and a water temperature of a bubbler for hydrogen was 80°C, and a water temperature of a bubbler for the air was 80°C. Herein, a gas flow rate of hydrogen was 529 mL/min, and a gas flow rate of the air was 1665 mL/min. Production Example 1 [Synthesis of polymer electrolyte A]

Under argon atmosphere, into a flask equipped with an azeotropic distillation device were placed 600 ml of dimethyl sulfoxide (hereinafter, referred to as 'DMSO'), 200 mL of toluene, 26.5 g (106.3 mmol) of sodium 2,5-dichlorobenzenesulfonate, 10.0 g of the following polyether sulfone which is a terminal chloro-type (Sumikaexcel PES5200P manufactured by SUMITOMO CHEMICAL COMPANY, LTD., Mn=5.4×10⁴, Mw=1.2×10⁵), and 43.8 g (280.2 mmol) of 2,2'-bipyridyl, and the mixture was stirred. Thereafter, a bath temperature was raised to 150°C, toluene was heated to distill off to azeotropy-dehydrate water in the system, and this was cooled to 60°C. Then, to this was added 73.4 g (266.9 mmol) of bis(1,5-cyclooctadiene)nickel (0), a temperature was raised to 80°C, and the mixture was stirred at the same temperature for 5 hours. After allowing to cool, the reaction solution was poured into a large amount of 6 mol/L hydrochloric acid to precipitate a polymer, which was filtered. Thereafter, a procedure of washing with 6 mol/L hydrochloric acid/filtration was repeated a few times, this was washed with water until the filtrated became neutral, and this was dried under reduced pressure to obtain 16.3 g of an objective polymer electrolyte. A weight average molecular weight was 270000, and an ion exchange capacity was 2.3 meq/g. And, m and n represent an average polymerization degree of a repeating unit in a parenthesis constituting each block.

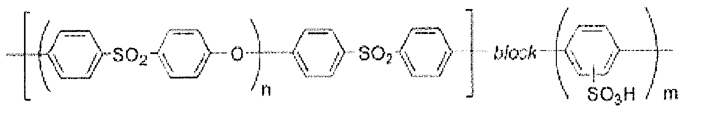

### Production Example 2 [Synthesis of polymer electrolyte B]

Polymerization was performed by placing 13.04 g (56.95 mmol) of potassium hydroquinonesulfonate, 34.71 g (68.34 mmol) of dipotassium 4,4'-difluorodiphenylsulfone-3,3'-disulfonate, 29.35 g (114.00 mmol) of 4,4'-difluorodiphenylsulfone, 23.50 g (125.39 mmol) of 4,4'-dihydroxydiphenylether, and 27.72 g (200.58 mmol) of potassium carbonate in a 2L separable flask equipped with a Dean-Stark tube, and performing azeotropic dehydration at a bath temperature of 170°C (inner temperature 140±5°C) for 3 hours in 395 mL of DMSO and 70 mL in toluene under argon atmosphere. After 3 hours, toluene was removed to the outside of the system, and a reaction was further performed at an inner temperature of 150°C for 3 hours. The reaction was traced by GPC measurement. After completion of the reaction, the reaction solution was allowed to cooled to 80°C, and added dropwise to 3 L of a 2 M hydrochloric acid aqueous solution. The precipitated white polymer was washed with water to a pH of 7 and, thereafter, a step of treatment with water at 80°C for 2 hours was performed two times. Drying in an oven (80°C) afforded 81.60 g (yield 97%) of a polymer electrolyte B which is a random polymer. A weight average molecular weight was 34000, and an ion exchange capacity was 2.0 meq/g. In addition, the following indicates that structural units constituting the polymer electrolyte B are randomly connected. And, a, b, c and d represent an average polymerization degree of a repeating unit in a parenthesis, and expression of 'ran' indicates a random copolymer in which a repeating unit in a parenthesis is randomly copolymerized.

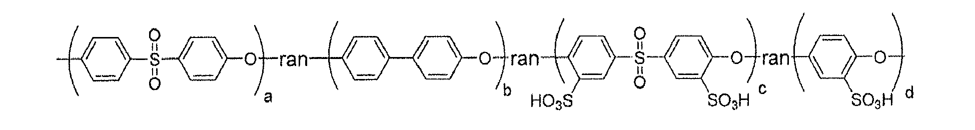

### Production Example 3 [Synthesis of stabilizer polymer d] (Synthesis of polymer a)

A 2-L separable flask equipped with a reduced pressure azeotropic distillation device was replaced with nitrogen, and 63.40 g of bis-4-hydroxydiphenylsulfone, 70.81 g of 4,4'-dihydroxybiphenyl, and 955 g of N-methyl-2-pyrrolidone (hereinafter, referred to as 'NMP') were added to a homogeneous solution. Thereafter, 92.80 g of potassium carbonate was added, and dehydration was performed at 135°C to 150°C for 4.5 hours under reduced pressure while NMP was distilled off. Thereafter, 200.10 g of dichlorodiphenylsulfone was added, and the reaction was performed at 180°C for 21 hours.

After completion of the reaction, the reaction solution was added dropwise to methanol, and the precipitated solid was filtered and recovered. The recovered solid was further via methanol washing, water washing and hot methanol washing, and dried to obtain 275.55 g of a polymer a. A structure of the polymer a is shown below. In the polymer a, a weight average molecular weight in terms of polystyrene as measured by GPC was 18000, and a ratio of q and p obtained from an integrated value of NMR measurement was q:p=7:3. Expression of the following 'random' indicates that structural units forming the following polymer a are randomly copolymerized.

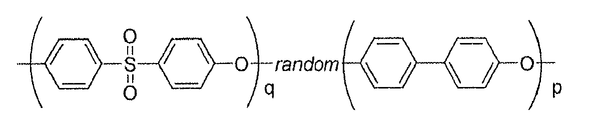

### (Synthesis of polymer b)

A 2-L separable flask was replaced with nitrogen, and 1014.12 g of nitrobenzene, and 80.00 g of the polymer a were added to a homogeneous solution. Thereafter, 50.25 g of N-bromosuccinimide was added, and this was cooled to 15°C. Subsequently, 106.42 g of 95% concentrated sulfuric acid was added dropwise over 40 minutes, and the reaction was performed at 15°C for 6 hours. After 6 hours, 150.63 g of a 10w% aqueous sodium hydroxide solution, and 18.36 g of sodium thiosulfate were added while cooled to 15°C. Thereafter, this solution was added dropwise to methanol, and the precipitated solid was filtered and recovered. The recovered solid was dried via methanol washing, water washing, and methanol washing again to obtain 86.38 g of a polymer b.

### (Synthesis of polymer c)

A 2-L separable flask equipped with a reduced pressure azeotropic distillation device was replaced with nitrogen, and 116.99 g of dimethylformamide, and 80.07 g of the polymer b were added to a homogeneous solution. Thereafter, dehydration under reduced pressure was performed for 5 hours while dimethylformamide was distilled off. After 5 hours, this was cooled to 50°C, 41.87 g of nickel chloride was added, a temperature was raised to 130°C, 69.67 g of triethyl phosphite was added dropwise, and the reaction was performed at 140°C to 145°C for 2 hours. After 2 hours, 17.30 g of triethyl sulfite was further added, and the reaction was performed at 145°C to 150°C for 3 hours. After 3 hours, the reaction was cooled to room temperature, a mixed solution of 1161 g of water and 929 g of ethanol was added dropwise, and the precipitated solid was filtered and recovered. To the recovered solid was added water, this was sufficiently ground, and washed with a 5 wt% hydrochloric acid aqueous solution, and washed with water to obtain 86.83 g of a polymer c.

### (Synthesis of polymer d)

A 5 L separable flask was replaced with nitrogen, 1200 g of 35 wt% hydrochloric acid, 550 g of water, and 75.00 g of the polymer c were added, and the mixture was stirred at 105°C to 110°C for 15 hours. After 15 hours, the reaction was cooled to room temperature, and 1500 g of water was added dropwise. Thereafter, the solid in the system was filtered and recovered, and the resulting solid was washed with water, and washed with hot water. After drying, 72.51 g of the objective polymer d was obtained. A content of phosphorus obtained from elementary analysis of the polymer d was 5.91%, and a value of x (phosphoric acid group number per one biphenylileneoxy group) calculated from an elementary analysis value was 1.6.

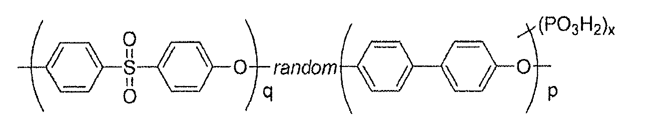

### Production Example 4 [Synthesis of dipotassium 4,4'-difluorodiphenylsulfone-3,3'-disulfonate]

To a reactor equipped with a stirrer were added 467 g of 4,4'-difluorodiphenylsulfone and 3500 g of 30% fuming sulfuric acid, followed by a reaction at 100°C for 5 hours. The resulting reaction mixture was cooled, and added to a large amount of ice water, and 470 mL of a 50% aqueous potassium hydroxide solution was further added thereto.

Then, the precipitated solid was collected by filtration, washed with ethanol, and dried. The resulting solid was dissolved in 6.0 L of deionized water, a 50% aqueous potassium hydroxide solution was added to adjust a pH to 7.5, and 460 g of potassium chloride was added. The precipitated solid was collected by filtration, washed with ethanol, and dried.

Thereafter, the resulting solid was dissolved in 2.9 L of DMSO, an insoluble inorganic salt was removed by filtration, and the residue was further washed with 300 mL of DMSO. 6.0 L of a solution of ethyl acetate/ethanol=24/1 was added dropwise to the resulting filtrate, and the precipitated salt was washed with methanol, and dried at 100°C to obtain 482 g of a solid of dipotassium 4,4'-difluorodiphenylsulfone-3,3'-disulfonate.

### Production Example 5 [Production of polymer electrolyte C] (Synthesis of polymer compound having sulfonic acid group)

Under argon atmosphere, to a flask equipped with an azeotropic distillation device were added 9.32 parts by weight of dipotassium 4,4'-difluorodiphenylsulfone-3,3'-disulfonate obtained in Production Example 1, 4.20 parts by weight of potassium 2,5-dihydroxybenzenesulfonate, 59.6 parts by weight of DMSO, and 9.00 parts by weight of toluene, and the argon gas was bubbled for 1 hour while these were stirred at room temperature.

Thereafter, to the resulting mixture was added 2.67 parts by weight of potassium carbonate, and the mixture was heated to stir at 140°C, and subjected to azeotropic dehydration. Thereafter, heating was continued while toluene was distilled off, to obtain a DMSO solution of a polymer compound having a sulfonic acid group. A total heating time was 14 hours. The resulting solution was allowed to cool to room temperature.

### (Synthesis of polymer compound without substantially ion exchange group)

Under argon atmosphere, to a flask equipped with an azeotropic distillation device were added 8.32 parts by weight of 4,4'-difluorodiphenylsulfone, 5.36 parts by weight of 2,6-dihydroxynaphthalene, 30.2 parts by weight of DMSO, 30.2 parts by weight of NMP, and 9.81 parts by weight of toluene, and the argon gas was bubbled for 1 hour while stirring at room temperature.

Thereafter, to the resulting mixture was added 5.09 parts by weight of potassium carbonate, and the mixture was heated to stir at 140°C, to perform azeotropic dehydration. Thereafter, heating was continued while toluene was distilled off. A total heating time was 5 hours. The resulting solution was allowed to cool to room temperature to obtain a NMP/DMSO mixed solution of a polymer compound without substantially ion exchange group.

### (Synthesis of block copolymer)

While the resulting NMP/DMSO mixed solution of a polymer compound without substantially ion exchange group was stirred, to this were added a total amount of a DMSO solution of the polymer compound having a sulfonic acid group, 80.4 parts by weight of NMP, and 45.3 parts by weight of DMSO, and a block copolymerization reaction was performed at 150°C for 40 hours.

The resulting reaction solution was added to a large amount of 2 N hydrochloric acid, followed by immersion for 1 hour. Thereafter, the produced precipitate was filtered, and immersed again in 2 N hydrochloric acid for 1 hour. The resulting precipitate was filtered, washed with water, and immersed in a large amount of hot water at 95°C for 1 hour. Then, this solution was dried at 80°C for 12 hours to obtain a polymer electrolyte C which is a block copolymer. A structure of this polymer electrolyte C is shown below.

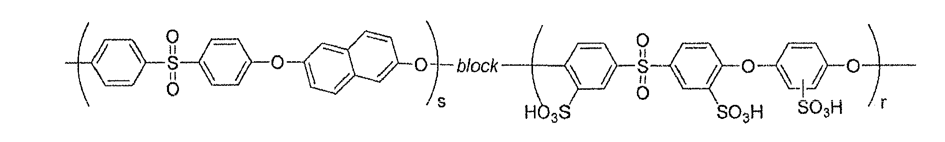

An ion exchange capacity of the resulting polymer electrolyte C was 1.9 meq/g, and a weight average molecular weight was 4×10⁵. And, s and r represent an average polymerization degree of a repeating unit in a parenthesis constituting each block.

### Production Example 6 [Manufacturing of ion conductive membrane]

The polymer electrolyte C obtained in Production Example 5 was dissolved in NMP to a concentration of 13.5 wt%, to prepare a polymer electrolyte solution. Then, this polymer electrolyte solution was added dropwise to a glass plate. Then, the polymer electrolyte solution was uniformly coating-spread on the glass plate using a wire coater. Thereupon, a coating thickness was controlled using a wire coater of clearance of 0.25 mm. After coating, the polymer electrolyte solution was dried at 80°C at a normal pressure. Then, the resulting membrane was immersed in 1 mol/L hydrochloric acid, washed with ion-exchanged water, and further dried at a normal temperature to obtain an ion conductive membrane C of a thickness of 30 µm.

### Example 1 [Preparation of polymer electrolyte emulsion]

In NMP were dissolved 0.9 g of the polymer electrolyte A obtained in Production Example 1 and 0.1 g of the polymer D obtained in Production Example 3 to 1.0 wt%, to prepare 100 g of a polymer electrolyte solution. Then, 100 g of this polymer electrolyte solution was added dropwise to 900 g of distilled water at an addition rate of 3 to 5 g/min using a burette to dilute the polymer electrolyte solution. This diluted polymer electrolyte solution was substituted with a dispersing medium with flowing water for 72 hours using a cellulose tube for a dialysis membrane dialysis (UC36-32-100 manufactured by Sanko Junyaku Co., Ltd: fraction molecular weight 14,000). This dispersing medium-substituted polymer electrolyte solution was concentrated to a concentration of 1.5% by weight using an evaporator to prepare a polymer electrolyte emulsion. An average particle diameter of this polymer electrolyte emulsion A was 101 µm. In addition, an amount of NMP in the polymer electrolyte emulsion A was 4 ppm.

### (Manufacturing of MEA)

Into 5.3 g of the polymer electrolyte emulsion A was placed 1 g of platinum-supported carbon (SA50BK, manufactured by N.E. Chemcat Corporation) supporting 50wt% platinum, and 28.8 g of ethanol was further added. The resulting mixture was ultrasound-treated for 1 hour, and stirred with a stirrer for 5 hours to obtain a catalyst ink. Subsequently, according to the method described in JP-A No. 2004-089976, a catalyst ink was coated on a region of 5.2 cm square at a central part of one side of the ion conductive membrane C. A distance from a discharge outlet to the membrane was set at 6 cm, and a stage temperature was set at 75°C. Eight times overlapping coating was performed, and this was allowed to stand on a stage for 15 minutes to remove a solvent, to form a catalyst layer. On the other side, the catalyst ink was similarly coated to form a catalyst layer. MEA was obtained, in which 0.6 mg/cm² of platinum calculated from a composition of the catalyst layer and a weight of coating was arranged per one side. As a result of an electric generation test, a current density at resulting 0.2 V was 1.8 A/cm². Comparative Example 1

### (Preparation of polymer electrolyte emulsion)

According to the same manner, except that the polymer electrolyte A used in Production Example 1 was replaced with the polymer electrolyte B obtained in Production Example 2, and an emulsion concentrated to 2 weight% was obtained, the same experiment as that of Example 1 was performed to obtain a polymer electrolyte emulsion B. An average particle diameter of this polymer electrolyte emulsion B was 437 nm. In addition, an amount of NMP in the polymer electrolyte emulsion B was 8 ppm.

### (Manufacturing of MEA)

In 5.3 g of the polymer electrolyte emulsion B was placed 1.4 g of platinum-supported carbon (SA50BK, manufactured by N.E. Chemcat Corporation) supporting 50wt% platinum, and 12.5 g of ethanol was further added. The resulting mixture was ultrasound-treated for 1 hour, and stirred with a stirrer for 5 hours to obtain a catalyst ink. Subsequently, according to the method described in JP-A No. 2004-089976, the catalyst ink was coated on a region of 5.2 cm square at a central part on one side of an ion conductive membrane C. A distance from a discharge outlet to a membrane was set at 6 cm, and a stage temperature was set at 75°C. Eight times overlapping coating was performed, and allowed to stand on a stage for 15 minutes to remove a solvent, to form a catalyst layer. On the other side, the catalyst ink was similarly coated to form a catalyst layer. MEA was obtained, in which 0.6 mg/cm² of platinum calculated from a composition of the catalyst layer and a weight of coating was arranged per one side. As a result of an electric generation test, a current density at resulting 0.2 V was 1.5 A/cm².

## Claims

1. A polymer electrolyte emulsion wherein a polymer electrolyte particle is dispersed in a dispersing medium,
wherein a polymer electrolyte contained in the polymer electrolyte particle is a block copolymer consisting of a segment having an acidic group and a segment without substantially ion exchange group.

2. The polymer electrolyte emulsion according to claim 1, wherein a volume average particle diameter obtained by a dynamic light scattering method is 100 nm to 200 µm.

3. The polymer electrolyte emulsion according to claim 1 or 2, wherein the polymer electrolyte is an aromatic hydrocarbon-based polymer.

4. The polymer electrolyte emulsion according to any one of claims 1 to 3, wherein the polymer electrolyte is a polymer electrolyte having a segment represented by the following formula (1), as the segment having an acidic group. 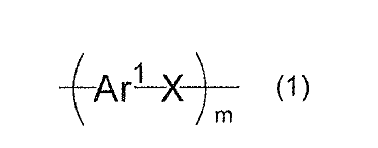 (wherein m represents an integer of 5 or more, Ar¹ is represents a divalent aromatic group, wherein the divalent aromatic group may have a substituent, a part or all of m Ar¹s has an acidic group, and X represents a direct bond or a divalent group)

5. The polymer electrolyte emulsion according to any one of claims 1 to 4, wherein the polymer electrolyte is a polymer electrolyte having a segment represented by the following formula (3) as the segment without substantially ion exchange group. 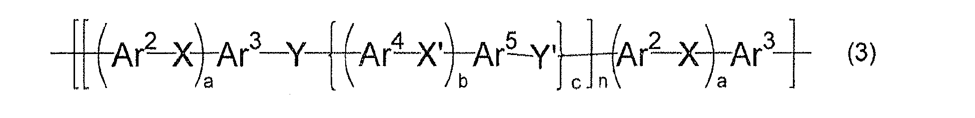 (wherein a, b and c each independently represent 0 or 1, n represents an integer of 5 or more, Ar², Ar³, Ar⁴ and Ar⁵ each independently represent a divalent aromatic group, wherein these divalent aromatic groups may be substituted with an alkyl group of a carbon number of 1 to 20 optionally having a substituent, an alkoxy group of a carbon number of 1 to 20 optionally having a substituent, an aryl group of a carbon number of 6 to 20 optionally having a substituent, an aryloxy group of a carbon number of 6 to 20 optionally having a substituent, an aryloxy group of a carbon number of 6 to 20 optionally having a substituent, an acyl group of a carbon number of 2 to 20 optionally having a substituent, or an optionally substituted arylcarbonyl group. X and X' each independently represent a direct bond or a divalent group, and Y and Y' each independently represent an oxygen atom or a sulfur atom)

6. The polymer electrolyte emulsion according to any one of claims 1 to 5, which is used for an electrode of a polymer electrolyte fuel cell.

7. The polymer electrolyte emulsion according to claim 6, wherein, a content of a good solvent of the polymer electrolyte is 200 ppm or less.

8. A catalyst composition comprising the polymer electrolyte emulsion according to any one of claims 1 to 7, and a catalyst component.

9. An electrode for a polymer electrolyte fuel cell comprising the catalyst composition according to claim 8.

10. A membrane electrode assembly having the electrode for a polymer electrolyte fuel cell according to claim 9.

11. A polymer electrolyte fuel cell having the membrane electrode assembly according to claim 10.
